# EUROPEAN PATENT SPECIFICATION

(11) **EP 1 677 507 B1**
(45) Date of publication and mention of the grant of the patent: **03.09.2008**
(21) Application number: 05112277.8
(22) Date of filing: 16.12.2005
(51) Int. Cl.: H04M 7/00, H04Q 3/66, H04Q 11/04

(54) **System, a subscriber terminal and a computer program for call establishment via a data network**
System, Teilnehmerendgerät und Computerprogramm zum Verbindungsaufbau über ein Datennetz
Système, terminal d'abonné et programme informatique pour établissement d'appel sur un réseau de données

(30) Priority: 29.12.2004 FI 20045507
(43) Date of publication of application: 05.07.2006
(73) Proprietor: TeliaSonera AB, 10663 Stockholm (SE)
(72) Inventor: Korhonen, Jouni, 11100 Riihimäki (FI); Jokela, Harri, 00350 Helsinki (FI)
(74) Representative: Holmström, Stefan Mikael

(56) References cited:
- WO-A-20/04095818
- GB-A- 2 342 807

## Description

### 1. Field of the Invention

This invention relates to a solution for establishing a telephone call between subscriber terminals. The invention especially relates to call establishment via a data network.

### 2. Description of Prior Art

The possibility to make telephone calls over data networks, such as VolP (Voice over Internet Protocol) calls over the Internet, has during recent years gained popularity due to the possibility to reduce costs for telephone calls. A drawback with prior art solutions is, however, that the calling party, in other words the A subscriber, does not always know that the called party, in other words the B subscriber, has the possibility to receive such a call via a data network. It is also possible that the A subscriber does not have the possibility the make a call over a data network and therefore makes an ordinary call via a telephone network. The B subscriber might, however, prefer to receive the call via a data network instead of via the telephone network. Prior art systems, however, do not offer the B subscriber the possibility to control how calls are connected to the subscriber terminal of the B subscriber.

In addition, in some current systems (like Skype) the B subscriber is not capable of receiving VOIP calls coming from traditional circuit-switched networks (like from GSM or PSTN) but is, however, capable of calling to such numbers. On the other hand, even if the B subscriber is capable of receiving VOIP calls from the circuit-switched networks (e.g by having a separate traditional phone number for that) the VOIP service might be a totally different system from the GSM system and numbering, and therefore, do not provide a convenient solution for a mobile subscriber.

Prior art solutions for establishing calls via data networks by utilizing a hybrid terminal for communication via a telephone network or a data network are disclosed in WO 2004/095818 A and GB 2 342 807 A, for instance. However, neither of these prior art references provide a satisfying solution for a B subscriber receiving a call via a telephone network to decide whether to establish the call via the telephone network or a data network.

### SUMMARY OF THE INVENTION

An object of the present invention is to solve the above mentioned drawback and to provide a solution which offers the called B subscriber an easy and user friendly possibility to control how calls to the subscriber terminal of the B subscriber are connected. This and other objects of the invention are achieved with a system according to independent claim 1 and a method according to independent claim 6.

The invention is based on the idea of utilizing a call-back call from the called B subscriber terminal via a data network in order to give the B subscriber the possibility to communicate with the calling A subscriber over a data network. Thus instead of establishing the original call from the A subscriber terminal via the telephone network to the B subscriber terminal, a call-back call is initiated from the B subscriber terminal. This call-back call is then connected to the call from the A subscriber terminal at a switching point in such a way that at least a part of the communication path consists of a data network.

Preferred embodiments of the system of the invention are disclosed in the dependent claims 2 to 5.

### BRIEF DESCRIPTION OF THE DRAWINGS

In the following the present invention will be described in closer detail by way of example and with reference to the attached drawings, in which

Figure 1 is a block diagram illustrating a first embodiment of the invention,

Figure 2 is a block diagram illustrating a second embodiment of the invention, and

Figure 3 is a block diagram illustrating a third embodiment of the invention.

### DESCRIPTION OF SOME EMBODIMENTS

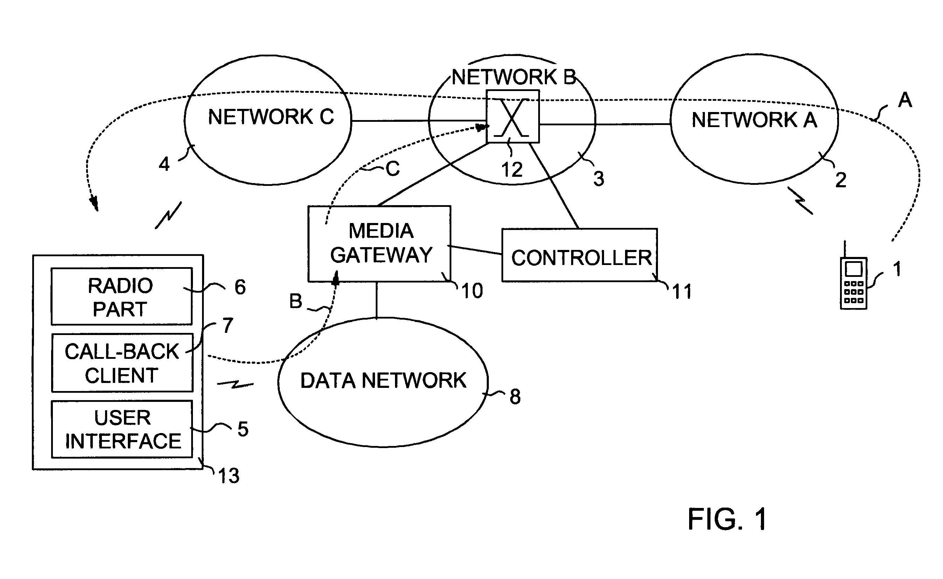

Figure 1 is a block diagram illustrating a first embodiment of the invention. In Figure 1 the user of the subscriber terminal 1, in other words the calling A subscriber, is attempting to make a telephone call to the user of the subscriber terminal 13, in other words the called B subscriber.

It is assumed, by way of example, in Figure 1 that the A subscriber terminal 1 and the B subscriber terminal 13 are both subscriber terminals of a cellular radio system, such as the GSM-system (Global System for Mobile communications). Thus the telephone network routing the call is in this case a cellular radio system. In Figure 1 the call is routed, as in prior art solutions, from the first network 2 (the network of operator A), where the A subscriber terminal is located, via the home network 3 of the B subscriber terminal 13 (the network of operator B) to the network 4 (the network of operator C), where the B subscriber terminal 13 is located at the moment. This is indicated with arrow A.

The B subscriber terminal 13 comprises a user interface 5, a radio part 6 and a call-back client 7. The radio part 6 is equipped with means for communicating via two different radio systems. In this example the radio part 6 is equipped with means which make it possible to communicate with the GSM network 4 and also with the data network 8, which in this example is an IP data network. The reader must understand that the other radio part connecting to the IP data networks can be e.g. WLAN or even a fixed connection.

In practice the call-back client 7 of the B subscriber terminal can be implemented with circuitry, a computer program or a combination of these. The call-back client 7 can be configured to automatically, as soon as an incoming call via the telephone network 4 is detected, initiate a call-back call via the IP data network 8. Alternatively, the call-back client 7 can inform the user of the B subscriber terminal 13 about the incoming call and let the user decide, by entering a selection via the user interface 5, if a call-back call should be initiated.

On the other hand, some of the current VOIP solutions available on the Internet, such as Skype, do not provide a possibility to receive voice calls using traditional phone numbers (as B subscribers) but provide a feature to call to traditional phone numbers (as A subscribers). For receiving calls, other identification types are used such as proprietary or SIP-addresses. The invention provides a solution to receive an incoming call request over the GSM network (typically this type of signaling is free) and then execute the actual call over the selected data connection (typically cheaper than to receive a GSM call in a roaming situation).

If the B subscriber terminal 13 receives an identifier of the calling A subscriber terminal 1 in connection with the incoming call, then this identifier can be included by the B subscriber terminal in a call request transmitted by the B subscriber terminal via the IP data network 8. Such an identifier may consist of the MSISDN (Mobile Subscriber International ISDN Number), in other words the telephone number of the A subscriber terminal, for instance. Alternatively, if the B subscriber terminal does not receive any identifier of the calling A subscriber terminal, the call-back client 7 can be configured to initiate a call-back call by including an identifier of the B subscriber terminal 13 in said call request. The call request is transmitted to a predetermined network element. If the call request includes an identifier of the A subscriber terminal, then this identifier is used in order to connect the call-back call. Alternatively, if the request does not include an identifier of the A subscriber terminal, the network element retrieves information from the home network of the B subscriber terminal in order to determine an identifier of the A subscriber terminal that initiated the call to the B subscriber terminal 13.

In Figure 1 the call request for initiating a call-back call is transmitted as indicated by arrow B via the IP data network 8 to a media gateway 10. The interface between the B subscriber terminal 13 and the IP data network 8 may be any suitable interface providing the B subscriber terminal with access to the services of the IP data network, such as a WLAN interface (Wireless Local Area Network). In this example it is assumed, by way of example, that the request for a call-back call is a request to establish a VolP call.

The media gateway 10 can be implemented as a computer program which is run on a network element in the telephone network 3, or, alternatively, as a separate server which is connected to the telephone network 3 and to a controller 11. The controller 11 can be implemented as a separate element, as a part of the media gateway, or as a part of a network element in the telephone network 3.

The controller 11 controls the media gateway 10 to route the call-back call to the switching point 12 in the telephone network 3, as ind icated by arrow C. The controller 11 also controls the switching point 12 to connect the call-back call to the call from the A subscriber terminal 1 at the switching point 12, and to release the call from the A subscriber terminal 1 on the communication path between the switching point 12 and the B subscriber terminal 13. Thus the call between the A subscriber terminal 1 and the B subscriber terminal 13 can be connected such that the call is routed partly via the telephone network (between the switching poi nt 12 and the A subscriber terminal 1) and partly via the IP data network 8 (between the switching point 12 and the B subscriber terminal 13). The subscriber terminal 1 is thus connected to a GSM call while the subscriber terminal 13 is connected to VolP call.

One way to connect the call-back call to the call from the A subscriber terminal 1 in such a way that the user of the A subscriber terminal does not notice the call-back call is to use a prior art conference call. In that case the switching point 12 at first establishes a conference call involving the call-back call and the call from the A subscriber terminal 1. When this conference call has been established, then the call via the network 4 to the B subscriber terminal 13 is released. This release can be initiated by the switching point 12, the controller 11 or the call-back client 7.

A significant advantage obtained with the above explained solution, is that the user of the B subscriber terminal is able to communicate via a VolP call, though the calling A subscriber terminal originally made a call attempt that was routed to the B subscriber terminal via the telephone network, in this case the GSM system. This makes it possible for the user of the B subscriber terminal to reduce the telephone bill, because in the GSM system the B subscriber, who is not located in the home network but roaming in another network, for instance in an other country, is required to pay a part of the costs for an incoming GSM call. Such costs can now be avoided. In addition, if the VOIP service provider and the home GSM service provider are the same, the home GSM service provider may get a bigger role and consequently a bigger portion of the revenues for connecting the call in a roaming situation. The GSM operator may also use the invention for load balancing between the GSM network and the IP data network.

The reader must understand that the circuit-switched voice call is used here as an example, and the invention can also be used for example for video calls as well.

In the above explanation it has been assumed, by way of example, that the A subscriber terminal is a subscriber terminal of a cellular radio system. However, it is also possible that the A subscriber terminal is a subscriber terminal of the fixed telephone network, in which case the connecting of the call can be carried out in the same way as explained above.

In the example of Figure 1 it has been assumed, by way of example, that the B subscriber terminal has a wireless connection to an IP data network. However, it is also possible that the radio part of the subscriber terminal 13 is used only for communication with the telephone network 4, and that the connection to the IP data network 8 is accomplished by a wired connection.

The call-back client 7 of the subscriber terminal 13 can be configured to automatically initiate the call-back in case certain parameters are within predetermined limits. Preferably the user of the subscriber terminal 13 is able to adjust such parameters. Such parameters can relate to:

- the costs of the call-back call (costs for utilizing the IP data network) as compared to the costs of answering the original call, in which case the cheaper alternative is automatically selected, or

- the quality offered by the available IP data network, in which case the original call is selected if the only available IP data network does not make it possible to achieve a call-back call with a sufficient quality.

The predetermined network element to which the subscriber terminal 13 transmits the call request for a call-back call may always consist of a network element which belongs to the home operator of the subscriber terminal. In such a case, the call request is always transmitted to the same network element, irrespectively of the location of the subscriber terminal. Alternatively it is possible that the operator of the network where the subscriber is currently located has a similar network element. In that case it is possible that the subscriber terminal at some stage after entering this network receives information about the IP address of this network element, and thus after that transmits all call requests for a call-back call to this network element.

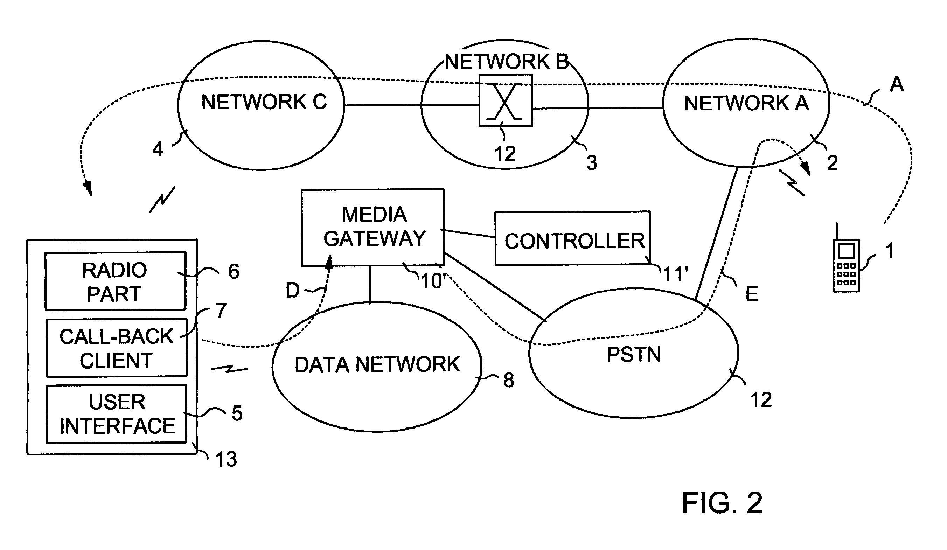

Figure 2 is a block diagram illustrating a second embodiment of the invention. The embodiment of Figure 2 is very similar to the one explained in connection with Figure 1. Therefore, in the following the embodiment of Figure 2 will be explained mainly by referring to the differences between these two embodiments. Those parts of Figure 2 which are the same as in Figure 1 have been given the same reference numbers as in Figure 1.

Also in Figure 2 the call from the subscriber terminal 1 is routed via the telephone network, for instance the GSM system, to the subscriber terminal 13'. This is illustrated with the arrow A. In this embodiment the subscriber terminal 13' receives an identifier of the calling A subscriber terminal.

Before initiating a call-back call, the call-back client 7' releases the call from subscriber terminal A. In case the call has already been established and a speech path exists to the subscriber terminal A, then the call-back client can generate a speech message stating, for instance, "Your call has been noticed. Please hang up. A call-back will be established", and disconnect the call immediately after this. Alternatively, if the call has not been established, then the call-back client 7' can control the radio part 6 to transmit a message over the radio path to the network 4 to indicate that the call has been refused.

The call-back call is initiated by the call-back client 7' by transmitting a call request (arrow D) containing the received A subscriber identifier to the predetermined network element, which consists of the media gateway 10'. In the embodiment of Figure 2 the media gateway 10' and the controller 11' are not connected to the home network 3 of the subscriber terminal 13. Instead, the call-back call is routed (arrow E) by the controller 11' to the PSTN (Public Switched Telephone Network), in other words, to the fixed telephone network 12. The fixed telephone network handles the call-back call 12 as a prior art VolP call that has been initiated by the subscriber terminal 13' and connects the call to the subscriber terminal 1 based on the identifier of the subscriber terminal.

The main difference between the embodiments of Figures 1 and 2 are thus that in Figure 2 the call-back call is handled as a separate new call made by the subscriber terminal 13', while the original call from the subscriber terminal 1 is released. The user of the subscriber terminal 1 will thus notice the call-back call.

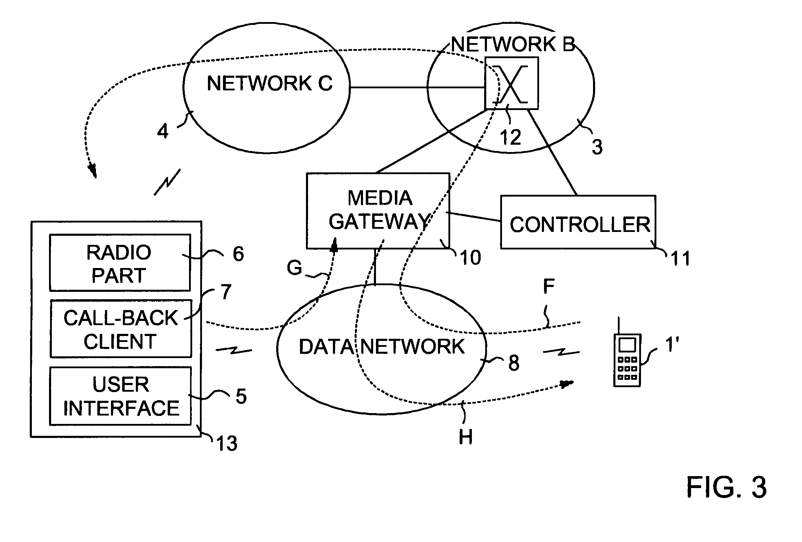

Figure 3 is a block diagram illustrating a third embodiment of the invention. The embodiment of Figure 3 is very similar to the one explained in connection with Figure 1. Therefore, in the following the embodiment of Figure 3 will be explained mainly by referring to the differences between these two embodiments. Those parts of Figure 3 which are the same as in Figure 1 have been given the same reference numbers as in Figure 1.

In Figure 3 it is assumed that the calling subscriber terminal 1' is making a VoIP call via the data network 8, which also in this example is an IP data network, to the subscriber terminal 13. However, as the user of the subscriber terminal 1' does not know that the subscriber terminal 13 is capable of handling VoIP calls, the user of the subscriber terminal 1' initiates a VoIP call by using the (for instance GSM) telephone number of the subscriber terminal 13. The call is thus routed via the IP data network 8 to the media gateway 10 and to the telephone network 3. The telephone network further routes 3 the call to the subscriber terminal 13 via the network 4, where the subscriber terminal 13 is roaming.

The call-back client 7 initiates the call-back call as explained in connection with Figure 1 (arrow G). The media gateway 10 receives the call request for the call-back call, and the controller 11 detects that the call-back call should be connected to subscriber terminal 1'. At this stage the controller 11 also detects that the subscriber terminal 1' has originally made the call as a VolP call. Therefore the controller controls the media terminal 10 to connect (arrow H) the subscriber terminals 13 and 1' directly via the IP data network 8 as a VolP call. Finally the controller 11 or call-back client sends a message to the control point 12 in the telephone network in order to release the call via the telephone network.

Figure 3 thus relates to an embodiment in which a call via an IP data network can be established, though it is possible that neither party originally was aware of the fact that both parties are able to handle calls via an IP data network.

It is to be understood that the above description and the accompanying Figures are only intended to illustrate the present invention. It will be obvious to those skilled in the art that the invention can be varied and modified also in other ways without departing from the scope of the invention as defined by the appended claims.

## Claims

1. A system comprising:
a switching point (12) for connection to a telephone network (2, 3, 4), said telephone network comprising means for routing a call from an A subscriber terminal (1, 1') to a B subscriber terminal (13), and to a data network (8), **characterized in that** said system further comprises:
a controller (11) for connecting a call-back call initiated by the B subscriber terminal (13) via said data network (8) to said switching point (12), and for controlling said switching point (12) to connect said call-back call to the call from the A subscriber terminal (1, 1') at said switching point.

2. The system of claim 1, **characterized in that** in order to connect the call-back call to said call from the A subscriber terminal (1, 1') at said switching point (12), the controller (11) is configured to:
initiate a conference call involving the call from the A subscriber terminal (1) to the B subscriber terminal (13) and the call-back call, and
release the B subscriber terminal (13) from the call from the A subscriber terminal (1).

3. The system according to claim 1 or 2, **characterized in that** the B subscriber terminal (13) is arranged to receive an A subscriber identifier in connection with the call from the A subscriber terminal (1, 1'), and to initiate said call-back call to the A subscriber terminal (1, 1') by utilizing said received A subscriber identifier.

4. The system according to claim 1 or 2, **characterized in that**
the B subscriber terminal (13) is configured to initiate said call-back call by transmitting a call request containing an identifier of the B subscriber terminal (13) via said data network (8) to a network element, and
the controller (11) is configured to identify said B subscriber terminal (13) based on said transmitted identifier, to retrieve from the telephone network (3) an identifier of the A subscriber terminal (1), whose call has been routed to the B subscriber terminal (13), and to utilize said retrieved identifier in order to connect the call-back call to the A subscriber terminal (1).

5. A system according to any one of claims 1 to 4, **characterized in that** said call-back call is a VoIP-call.

6. A method for establishing a call between subscriber terminals, comprising:
receiving at a B subscriber terminal (13) a call from an A subscriber terminal (1,1') via a telephone network (4) and a switching point (12), **characterized in that** said method further comprises:
connecting a call-back call initiated by the B subscriber terminal (13) to said switching point (12) via a data network (8), and
establishing said call by controlling said switching point to connect said call-back call to the call from said A subscriber terminal at said switching point.

## Patentansprüche

1. System, das aufweist:
einen Schaltpunkt (12) zum Verbinden mit einem Telefonnetz (2, 3, 4), wobei das Telefonnetz eine Einrichtung zum Leiten eines Rufs von einem A-Teilnehmer-Anschluss (1, 1') zu einem B-Teilnehmer-Anschluss (13) und zu einem Datennetz (8) aufweist,
**dadurch gekennzeichnet, dass** das System weiterhin aufweist:
eine Steuereinrichtung (11) zum Verbinden eines Rückrufs, der von dem B-Teilnehmer-Anschluss (13) eingeleitet wird, über das Datennetz (8) mit dem Schaltpunkt (12) und zum Steuern des Schaltpunkts (12), um den Rückruf an dem Schaltpunkt mit dem Ruf von dem A-Teilnehmer-Anschluss (1, 1') zu verbinden.

2. System nach Anspruch 1, **dadurch gekennzeichnet, dass,** um den Rückruf an dem Schaltpunkt (12) mit dem Ruf von dem A-Teilnehmer-Anschluss (1, 1') zu verbinden, die Steuereinrichtung (11) dazu ausgelegt ist, um:
einen Konferenzruf einzuleiten, der den Ruf von dem A-Teilnehmer-Anschluss (1) zu dem B-Teilnehmer-Anschluss (13) und den Rückruf einbezieht, und
den B-Teilnehmer-Anschluss (13) von dem Ruf von dem A-Teilnehmer-Anschluss (1) frei zu geben.

3. System nach Anspruch 1 oder 2, **dadurch gekennzeichnet, dass** der B-Teilnehmer-Anschluss (13) dazu ausgelegt ist, einen A-Teilnehmer-Identifikator in Verbindung mit dem Ruf von dem A-Teilnehmer-Anschluss (1, 1') zu empfangen und den Rückruf zu dem A-Teilnehmer-Anschluss (1, 1') unter Verwendung des empfangenen A-Teilnehmer-Identifikators einzuleiten.

4. System nach Anspruch 1 oder 2, **dadurch gekennzeichnet, dass**
der B-Teilnehmer-Anschluss (13) dazu ausgelegt ist, den Rückruf durch Senden einer Rufanforderung, die einen Identifikator des B-Teilnehmer-Anschlusses (13) enthält, über das Datennetz (8) zu einem Netzelement einzuleiten, und
die Steuereinrichtung (11) dazu ausgelegt ist, den B-Teilnehmer-Anschluss (13) auf der Grundlage des gesendeten Identifikators zu identifizieren, einen Identifikator des A-Teilnehmer-Anschlusses (1), dessen Ruf zu dem B-Teilnehmer-Anschluss geleitet worden ist, aus dem Telefonnetz (3) wieder zu gewinnen, und den wieder gewonnenen Identifikator zu verwenden, um den Rückruf zu dem A-Teilnehmer-Anschluss (1) zu verbinden.

5. System nach einem der Ansprüche 1 bis 4, **dadurch gekennzeichnet, dass** der Rückruf ein VoIP-Ruf ist.

6. Verfahren zum Bilden eines Rufs zwischen Teilnehmeranschlüssen, das aufweist:
Empfangen eines Rufs von einem A-Teilnehmer-Anschluss (1, 1') über ein Telefonnetz (4) und einen Schaltpunkt (12) an einem B-Teilnehmer-Anschluss (13),
**dadurch gekennzeichnet, dass** das Verfahren weiterhin aufweist:
Verbinden eines Rückrufs, der von dem B-Teilnehmer-Anschluss (13) eingeleitet wird, über ein Datennetz (8) mit dem Schaltpunkt (12), und
Bilden des Rufs durch Steuern des Schaltpunkts, um den Rückruf an dem Schaltpunkt mit dem Ruf von dem A-Teilnehmer-Anschluss zu verbinden.

## Revendications

1. Système comprenant :
un point de commutation (12) de connexion à un réseau téléphonique (2, 3, 4), ledit réseau téléphonique comprenant des moyens pour acheminer un appel en provenance d'un terminal d'abonné A (1, 1') vers un terminal d'abonné B (13), et à un réseau de données (8), **caractérisé en ce que** ledit système comprend en outre :
un contrôleur (11) pour connecter un appel de rappel lancé par le terminal d'abonné B (13) par l'intermédiaire dudit réseau de données (8) audit point de commutation (12), et pour contrôler ledit point de commutation (12) afin de connecter ledit appel de rappel à l'appel en provenance du terminal d'abonné A (1, 1') au niveau dudit point de commutation.

2. Système selon la revendication 1, **caractérisé en ce que**, afin de connecter ledit appel de rappel en provenance du terminal d'abonné A (1, 1') au niveau dudit point de commutation (12), le contrôleur (11) est configuré de manière à :
lancer un appel de conférence impliquant l'appel en provenance du terminal d'abonné A (1) vers le terminal d'abonné B (13) et l'appel de rappel, et
libérer le terminal d'abonné B (13) de l'appel en provenance du terminal d'abonné A (1).

3. Système selon la revendication 1 ou la revendication 2, **caractérisé en ce que** le terminal d'abonné B (13) est agencé de manière à recevoir un identifiant d'abonné A en association avec l'appel en provenance du terminal d'abonné A (1, 1'), et à lancer ledit appel de rappel vers le terminal d'abonné A (1, 1') en utilisant ledit identifiant d'abonné A reçu.

4. Système selon la revendication 1 ou la revendication 2, **caractérisé en ce que**
le terminal d'abonné B (13) est configuré de manière à lancer ledit appel de rappel en transmettant une demande d'appel qui contient un identifiant du terminal d'abonné B (13) par l'intermédiaire dudit réseau de données (8), à un élément de réseau, et
le contrôleur (11) est configuré de manière à identifier ledit terminal d'abonné B (13) sur la base dudit identifiant transmis, à rechercher en provenance du réseau téléphonique (3) un identifiant du terminal d'abonné A (1), dont l'appel a été acheminé vers le terminal d'abonné B (13), et à utiliser ledit identifiant recherché afin de connecter l'appel de rappel au terminal d'abonné A (1).

5. Système selon l'une quelconque des revendications 1 à 4, **caractérisé en ce que** ledit appel de rappel est un appel Voix sur IP.

6. Procédé pour établir un appel entre des terminaux d'abonnés, comprenant :
la réception, au niveau d'un terminal d'abonné B (13), d'un appel en provenance d'un terminal d'abonné A (1, 1') par l'intermédiaire d'un réseau téléphonique (4) et d'un point de commutation (12),
**caractérisé en ce que** ledit procédé comprend en outre :
la connexion d'un appel de rappel lancé par le terminal d'abonné B (13), audit point de commutation (12) par l'intermédiaire d'un réseau de données (8), et
l'établissement dudit appel en contrôlant ledit point de commutation pour connecter ledit appel de rappel à l'appel en provenance dudit terminal d'abonné A, au niveau dudit point de commutation.
